(19) Europäisches Patentamt

European Patent Office

Office européen des brevets

(11) Veröffentlichungsnummer: **0 663 285 A2**

# (12) EUROPÄISCHE PATENTANMELDUNG

(21) Anmeldenummer: **95105727.2**

(51) Int. Cl.6: **B32B 27/32**

(22) Anmeldetag: **22.05.90**

---

Diese Anmeldung ist am 18 - 04 - 1995 als Teilanmeldung zu der unter INID-Kode 60 erwähnten Anmeldung eingereicht worden.

(30) Priorität: **31.05.89 DE 3917652**

(43) Veröffentlichungstag der Anmeldung:
**19.07.95 Patentblatt 95/29**

(60) Veröffentlichungsnummer der früheren Anmeldung nach Art. 76 EPÜ: **0 400 456**

(84) Benannte Vertragsstaaten:
**BE DE ES FR GB IT**

(71) Anmelder: **HOECHST AKTIENGESELLSCHAFT**

**D-65926 Frankfurt (DE)**

(72) Erfinder: **Peiffer, Herbert, Dr.**
**Thüringer Strasse 26**
**D-55126 Mainz (DE)**
Erfinder: **Schlögl, Gunter, Dr.**
**Finkenweg 2**
**D-65779 Kelkheim (DE)**
Erfinder: **Bothe, Lothar, Dr.**
**Kurt-Schumacher-Strasse 69E**
**D-55124 Mainz (DE)**

---

(54) **Mehrschichtige transparente Polyolefinfolie für die Schrumpfetikettieranwendung.**

(57) Es wird eine transparente schrumpffähige Folie beschrieben, die eine Basisschicht hergestellt aus propylenhaltigen Polymeren und Kohlenwasserstoffharz umfaßt. Die Basisschicht enthält 5 bis 40 Gew.-% eines Propylenhomopolymeren, 0 bis 30 Gew.-% eines hydrierten Kohlenwasserstoffharzes mit einem Erweichungspunkt im Bereich von 80 bis 125 °C und 30 bis 95 Gew.-% eines statistischen Ethylen-Propylen-Copolymeren, wobei die Prozentangaben bezogen sind auf das Gesamtgewicht der Mischung. Beidseitig auf der Basisschicht sind Deckschichten angeordnet. Es wird auch ein Verfahren zur Herstellung der Folie beschrieben.

EP 0 663 285 A2

Die Erfindung betrifft eine transparente schrumpffähige Folie umfassend eine Basisschicht hergestellt aus propylenhaltigen Polymeren und Kohlenwasserstoffharz. Die Erfindung betrifft ferner ein Verfahren zur Herstellung einer solchen Folie und deren Verwendung als Schrumpfetiketten.

Aus "Verpackungsrundschau" 10/1983, 1121-1122, ist bereits bekannt, zylinderförmige oder annähernd zylinderförmige Verpackungseinheiten wie Flaschen oder Dosen vollumfänglich mit Rundumetiketten zu umschließen; diese Rundumetiketten werden in der angelsächsischen Literatur als sogenannte 'sleeves' bezeichnet. Die Folien für diesen Anwendungszweck sind z. B. aus Polyethylen, Polybutylen, Polystyrol, Polyethylen-Polypropylen-Copolymeren, Ethylen-Vinylacetat-Copolymeren, verschiedenen Blends, insbesondere aber aus Polyvinylchlorid. Zum Erreichen der für den gewünschten Anwendungszweck geeigneten Schrumpfeigenschaften der Folien in der Umfangsrichtung der Rundumetiketten werden die Folien im allgemeinen biaxial streckorientiert, was z. B. nach dem Bubble-, Stenter- oder Kalanderverfahren bewerkstelligt werden kann, wobei insbesondere die Orientierung in Querrichtung bevorzugt wird. Um ein wirklich faltenfreies Anliegen der Rundumetiketten an der Verpackungseinheit zu gewährleisten, werden als Schrumpfwerte z. B. Querschrumpf ($s_q$) von ungefähr 15 bis 40 % und Längsschrumpf ($s_l$) von maximal 2 bis 5 % bei einer Temperatur von 90 °C und einer Behandlungsdauer von 15 min im Umluftofen gefordert.

Die Schrumpffolien werden außerdem z. B. im Konterdruckverfahren bedruckt und anschließend zu einem Schlauch geklebt oder geschweißt. Durch den kontrollierten Querschrumpf legt sich der Schlauch im Schrumpfofen fest und faltenfrei um die Verpackungseinheit. Das Aufbringen des Etiketts erfolgt maschinell mit Hilfe von Bürsten oder wahlweise auch manuell; Außer dem gewünschten Schrumpf müssen die Rundumetiketten folgende Eigenschaften besitzen: hoher Glanz, glasklar, gute Gleitfähigkeit und Steifigkeit (≙ Produkt aus E-Modul und Dicke³) für die maschinelle Aufbringung des Etiketts, gute Bedruckbarkeit und gute Verschweiß-/Verklebbarkeit.

Für die wirtschaftliche Herstellung von Rundumetiketten ist es weiterhin von Vorteil, wenn die Folien heißsiegelbar sind. Im Vergleich zum Kleben und Schweißen ist nämlich beim Siegeln der Zeitaufwand geringer, zudem kann Material eingespart werden.

Das gesamte bisher beschriebene Anforderungsprofil wird nach dem Stand der Technik gemäß US-PS 4,352,849 am besten von PVC-Folie erreicht. Insbesondere wird durch das hohe Schrumpfvermögen und die guten optischen und mechanischen Eigenschaften nahezu der gesamte Anwendungsbereich abgedeckt. Die Gestalts- oder Durchmesseränderung der Verpackungseinheit, insbesondere der Dose oder Flasche, kann dabei im Bereich des Etiketts mehr als 30 % ausmachen.

Als Nachteil der Rundumetiketten aus PVC ist insbesondere der hohe Preis zu nennen, der hauptsächlich aus der hohen Dichte von 1,39 kg/dm³ resultiert, die ca. 50 % höher ist als diejenige von z. B. Polypropylen. Ferner bestehen Probleme hinsichtlich Korrosion der Herstellungs- und Verarbeitungsaggregate (vgl. EP-A-0 233 400).

Schrumpfetikettenfolien auf polyolefinischer Basis bestehen vor allem aus Blends auf Basis von Homo-, Co- und Terpolymeren. Zur Erzielung der geforderten Schrumpfeigenschaften werden die Folien im Bubble-oder im Stenter-Prozeß biaxial gestreckt.

Schrumpfetiketten auf Basis von Polyolefin-Folien haben nach dem Stand der Technik Eigenschaften, die bei der Verarbeitung in der Praxis von Nachteil sein können:

1. Die mechanischen Eigenschaften wie Reißfestigkeit, E-Modul und Querdickenprofil sind meistens schlecht,

2. das Verfahren zur Erzielung eines hohen Querschrumpfs und eines niedrigen Längsschrumpfs ist sehr aufwendig, und

3. die Folien sind nicht siegelfähig.

Geringe mechanische Eigenschaften sind insbesondere bei automatisch arbeitenden Schrumpfmaschinen von Nachteil. Um eine ausreichende (gleiche oder ähnlich gute) Steifigkeit wie beim PVC zu bekommen, muß man die Dicke der polyolefinischen Folie teilweise um 50 % und mehr anheben. Dies verteuert jedoch im gleichen Maße den Preis der Folie, und außerdem wird durch die größere Dicke - bei gleichem Schrumpfendwert - die Schrumpfgeschwindigkeit kleiner. Ein nach dem Stand der Technik arbeitendes Verfahren zur Erzielung eines hohen Verhältnisses zwischen Querschrumpf und Längsschrumpf von Polypropylenfolien ist z. B. in der EP-A-0 171 733 näher beschrieben, aus der auch Folien der gattungsbildenden Art aus propylenhaltigen Polymeren und einem Harzzusatz bekannt sind. Bei diesem Verfahren wird nach dem Zweistufenprozeß eine biaxial orientierte Folie hergestellt. Zur Erzielung eines geringen Längsschrumpfs wird zwischen der Längsstreckung und der Querstreckung die Folie in einem zusätzlichen Schritt bei erhöhter Temperatur (ca. 130 °C) getempert. Die Temperzeit beträgt dabei 2 bis 180 s. Je nach Geschwindigkeit der Produktionsanlage - üblich sind heute ca. 200 bis 300 m/min - muß bei diesem Verfahren ein relativ aufwendiges und teures Aggregat zwischen der Längs- und der Querstreckung angeordnet werden, denn bei einer Temperzeit von z. B. 60 s und einer Maschinengeschwindigkeit von 200 m/min würde hierzu eine Ofenlänge von 200 m benötigt. Für die Folienproduktion nach heute üblichen Verfahren ist demnach die Methode unter verfahrenstechnischen Gesichtspunkten wenig geeignet. Außerdem weist die Folie verbesserungswürdige mechanische Eigenschaften auf, insbesondere was die Dickengleichmäßigkeit gemessen über die Folienbreite betrifft, die infolge des sehr niedrigen Querstreckverhältnisses von ca. 4 unbefriedigend ist. Eine gleichmäßige Rollenaufwicklung und ein zufriedenstellendes Druckbild sind nicht zu erreichen.

Es ist weiterhin bekannt, daß für die Rundumetikettenanwendung neben PVC vor allem Blends auf Basis von olefinischen Homo-, Co- und Terpolymeren verwendet werden. So beschreibt beispielsweise die Anmeldung JP-A-224 868 (Toray) eine in der Hitze schrumpfende Mehrschichtfolie auf Polypropylenbasis mit AB- oder ABA-Schichtaufbau. Schicht A besteht dabei aus einem statistischen Ethylen-Propylen-Copolymeren und Schicht B aus einem Blend aus einem statistischen Ethylen-Propylen-Copolymeren und einem Propylen-Butylen-Copolymeren. Der Schrumpf dieser Folie in Umfangsrichtung des gefertigten Sleeves wird mit $s_q \geq 15$ % bei 100 °C angegeben. Nachteilig an dieser Folie sind allerdings die auffallend niedrigen Werte für die mechanischen Eigenschaften. Betragen beim PVC die Werte für den E-Modul in Längsrichtung ($E_l$) ungefähr 2 600 bis 2 900 N/mm$^2$ und in Querrichtung ($E_q$) ungefähr 3 500 bis 3800 N/mm$^2$, so betragen bei obiger polyolefinischer Folie die Werte bei $E_l$ etwa 100 bis 600 N/mm$^2$ und $E_q$ etwa 100 bis 1 500 N/mm$^2$. Um eine gleiche oder ähnlich gute Steifigkeit wie beim PVC zu bekommen, muß man die Dicke der polyolefinischen Folie um ca. 50 % anheben. Dies verteuert jedoch im gleichen Maße den Preis der Folie.

Die Aufgabe der vorliegenden Erfindung bestand nun darin, eine transparente, gut verklebbare und gut schrumpfbare Mehrschichtfolie für Rundumetiketten auf Basis von Polypropylen zu entwickeln, die gute optische und gute mechanische Eigenschaften hat, darüber hinaus siegelfähig sein sollte, auf schnellaufenden Maschinen (Geschwindigkeit $\geq$ 100 m/min) verfahrenssicher herstellbar ist und dadurch vor allem wirtschaftliche Vorteile gegenüber Folien nach dem Stand der Technik ermöglicht.

Gelöst wird die diese Aufgabe durch eine Folie der eingangs genannten Gattung, deren kennzeichnende Merkmale darin bestehen, daß die Basisschicht aus propylenhaltigen Polymeren und Kohlenwasserstoffharz hergestellt ist und als wesentliche Komponenten enthält: 5 bis 40 Gew.-% eines Propylenhomopolymeren, bis 30 Gew.-% eines hydrierten Kohlenwasserstoffharzes mit einem Erweichungspunkt im Bereich von 80 bis 125 °C und mindestens 30 Gew.-% eines statistischen Ethylen-Propylen-Copolymeren, wobei die Prozentangaben bezogen sind auf das Gesamtgewicht der Mischung, und daß beidseitig auf der Basisschicht Deckschichten angeordnet sind und daß die Folie ein Schrumpfvermögen von mehr als 15 % bei 90 °C und von mehr als 40 % bei 120 °C in Querrichtung und gleichzeitig ein Schrumpfvermögen von weniger als 5 % bei 90°C und von weniger als 10 % bei 120 °C in Längsrichtung besitzt, wobei die Prozentangaben jeweils bezogen sind auf die jeweilige Längenausdehnung der Folie vor dem Schrumpfprozeß.

Das Propylenhomopolymere der Basisschicht ist ein isotaktisches Polypropylen mit einem n-heptanlöslichen Anteil von 15 Gew.-% oder weniger, wobei isotaktische Polypropylene mit einem n-heptanlöslichen Anteil von 2 bis 6 Gew.-% besonders bevorzugt sind. Geeignete Propylenhomopolymere besitzen zweckmäßigerweise einen Schmelzflußindex von 0,5 g/10 min bis 8 g/10 min bei 230 °C und 2,16 kp Belastung (bestimmt nach DIN 53 735), inbesondere von 1,5 g/10 min bis 4 g/10 min.

Bei dem erfindungsgemäß in der Basisschicht der Folie enthaltenen Kohlenwasserstoffharz handelt es sich um ein niedrigmolekulares synthetisches Harz, das einen Erweichungspunkt in dem bevorzugten Bereich von 90 bis 120 °C aufweist, bestimmt gemäß ASTM-E 28. Derartige Kohlenwasserstoffharze werden gewöhnlich aus harzbildenden Verbindungen wie Styrol, Methylstyrol, Vinyltoluol, Inden, Pentadien, Cyclopentadien u. ä. gebildet. Erfindungsgemäß werden insbesondere hydrierte Harze, insbesondere hydrierte Cyclopentadienharze, besonders bevorzugt. Die Farbzahl nach Saybolt (gemäß ASTM D 158) ist größer als 20, vorzugsweise größer als 25.

Das statistische Ethylen-Propylen-Copolymere hat vorzugsweise einen Schmelzpunkt im Bereich von 125 bis 145 °C und eine Schmelzenthalpie von 60 bis 90 J/g. Der Anteil an Ethylen beträgt 4,0 bis 7,0 Gew.-%, bezogen auf das Gesamtgewicht des Polymeren.

Die Deckschichten der erfindungsgemäßen Schrumpffolie bestehen aus alphaolefinischen Polymeren. Geeignete Alpha-Olefinpolymere sind Ethylenhomopolymere, Copolymere aus Ethylen und Propylen, Ethylen oder Propylen und Butylen oder einem anderen Alpha-Olefin mit 5 bis 10 Kohlenstoffatomen, Terpolymere aus Ethylen, Propylen und Butylen oder einem anderen Alpha-Olefin mit 5 bis 10 Kohlenstoffatomen oder Mischungen aus diesen Polymeren. Ethylen-Propylen-Copolymere, Ethylen-Butylen-Copolymere, Propylen-Butylen-Copolymere, Ethylen-Propylen-Butylen-Terpolymere oder Mischungen aus diesen Polymeren werden bevorzugt eingesetzt. Besonders bevorzugte Olefinpolymere für die Deckschichten sind Ethylen-Propylen-Copolymere mit Propylen als Hauptkomponente und einem Ethylengehalt von 2 bis 10 Gew.-% (bezogen auf das Copolymere), Propylen-Butylen-Copolymere mit Propylen als Hauptkomponente und einem Butylengehalt von 0,5 bis 25 Gew.-% (bezogen auf das Copolymere) und Ethylen-Propylen-Butylen-Terpolymere mit Propylen als Hauptkomponente, 0,5 bis 7 Gew.-% Ethylen und 5 bis 30 Gew.-% Butylen (Gewichtsprozent bezogen auf das Terpolymere) sowie Mischungen aus diesen Polymeren. Bei den Co- und Terpolymeren handelt es sich um statistische Polymere.

Das Olefinpolymere der Deckschichten hat einen niedrigeren Schmelzpunkt als die Polymer/Harz-Mischung der Basisschicht. Der Schmelzflußindex des Olefinpolymeren bzw. der Olefinpolymermischung liegt höher als jener des Propylenpolymeren der Basisschicht. Das Olefinpolymere bzw. die Mischung für die Deckschichten hat einen Schmelzflußindex von im allgemeinen 1 bis 12 g/10 min, vorzugsweise 3 bis 9 g/10 min, bei 230 °C und 2,16 kp Belastung (DIN 53 735).

Um bestimmte Eigenschaften der erfindungsgemäßen Schrumpffolie noch weiter zu verbessern, insbesondere was Verbesserungen des Laufverhaltens der Folie bei dem Herstellungs- oder Verarbeitungsprozeß angeht, können die Schichten geeignete Wirkstoffkomponenten in jeweils wirksamen Mengen enthalten, vorzugsweise Antistatika, Antiblockmittel und/oder Gleitmittel.

Bevorzugte Antistatika sind im wesentlichen geradkettige und gesättigte aliphatische, tertiäre Amine mit einem aliphatischen Rest mit 10 bis 20 Kohlenstoffatomen, die mit 2-Hydroxyalkyl-($C_1$-$C_4$)-Gruppen substituiert sind, worunter N,N-bis-(2-Hydroxyethyl)-alkylamine mit $C_{10}$-$C_{20}$, vorzugsweise $C_{12}$-$C_{18}$, als Alkylgruppen besonders geeignet sind. Die wirksame Menge an Antistatikum liegt im Bereich von 0,05 bis 1 Gew.-%, bezogen auf die Schicht.

Als besonders zweckmäßig hat sich die Ausrüstung der Basisschicht mit 0,1 bis 0,7 Gew.-% eines N,N-bis-Ethoxyalkylamins mit einem aliphatischen Rest mit 10 bis 20 Kohlenstoffatomen erwiesen.

Nach einer weiteren bevorzugten Ausführungsform enthält mindestens eine Deckschicht 0,1 bis 0,8 Gew.-%, bevorzugt 0,15 bis 0,3 Gew.-%, eines Antiblockmittels einer mittleren Teilchengröße von 0,5 bis 3 $\mu$m, bevorzugt von 1 bis 2 $\mu$m.

Geeignete Antiblockmittel sind anorganische Zusatzstoffe wie Siliciumdioxid, Calciumcarbonat, Magnesiumsilikat, Aluminiumsilikat, Calciumphosphat und dergleichen und/oder unverträgliche organische Polymerisate wie Polyamide, Polyester, Polycarbonate und dergleichen. Siliciumdioxid oder Calciumcarbonat werden bevorzugt als Antiblockmittel eingesetzt.

Beispiele für Gleitmittel sind höhere aliphatische Säureamide, höhere aliphatische Säureester, Wachse und Metallseifen sowie Polydimethylsiloxan. Die wirksame Menge an Gleitmittel liegt im Bereich von 0,1 bis 2 Gew.-%, bezogen auf das Gewicht der Schicht. Als besonders geeignet hat sich der Zusatz von höheren aliphatischen Säureamiden (z. B. Erucasäureamid) mit 0,15 bis 0,25 Gew.-% in der Basisschicht und/oder den Deckschichten erwiesen. Sehr gute Ergebnisse werden durch den Zusatz von Polydimethylsiloxan in eine oder beide Deckschichten erreicht. Die Zusatzmenge liegt zweckmäßig im Bereich von 0,5 bis 1,5 Gew.-%, wobei die Viskosität des Polydimethylsiloxans zwischen 1 000 und 500 000 mm$^2$/s liegt.

Die Dicke der erfindungsgemäßen Folie liegt im Bereich von 20 bis 60 $\mu$m, vorzugsweise von 30 bis 50 $\mu$m, wobei die Deckschichten eine Dicke von 0,5 bis 1,5 $\mu$m aufweisen.

Die im vorstehenden bezüglich ihrer chemischen Zusammensetzung beschriebene erfindungsgemäße Folie zeichnet sich insbesondere durch ganz besonders wünschenswerte Schrumpfeigenschaften aus. Sie besitzt nämlich ein Schrumpfvermögen von mehr als 15 % bei 90 °C und von mehr als 40 % bei 120 °C in Querrichtung und gleichzeitig ein Schrumpfvermögen von weniger als 5 % bei 90 °C und von weniger als 10 % bei 120 °C in Längsrichtung, wobei die Prozentangaben jeweils bezogen sind auf die jeweilige Längenausdehnung der Folie vor dem Schrumpfprozeß. Die angegebenen Schrumpfwerte sind jeweils im Umluftofen bei einer Dauer von 15 min gemäß DIN 406 34 ermittelt worden. Vorzugsweise liegt das Schrumpfvermögen der erfindungsgemäßen Folie in Querrichtung in einem Bereich von 15 bis 25 % bei 90 °C und von 40 bis 60 % bei 120 °C und in Längsrichtung in einem Bereich von maximal 3 bis 4 % bei 90 °C und von maximal 7 bis 10 % bei 120 °C, jeweils bezogen auf die Längenausdehnung der Folie vor dem Schrumpfprozeß.

Neben den bereits beschriebenen hervorragenden Schrumpfeigenschaften besitzt die erfindungsgemäße Folie zusätzlich noch in hohem Maße wünschenswerte mechanische Eigenschaften. Der Elastizitätsmodul wird mit einem Zug-Dehnungsgerät der Firma Zwick in Ulm-Einsingen des TYPS 1445 gemäß DIN 53 455 bestimmt. Die erfindungsgemäße Folie besitzt danach einen E-Modul in Längsrichtung von mehr als 1 200 N/mm$^2$, bevorzugt von 1 300 bis 1 800 N/mm$^2$, und einen E-Modul in Querrichtung von mehr als 3 000 N/mm$^2$, vorzugsweise von 3 500 N/mm$^2$ bis 4 500 N/mm$^2$.

Ein anderer physikalischer Parameter, der die mechanischen Eigenschaften der erfindungsgemäßen Folie verdeutlicht, ist die Reißfestigkeit, die ebenfalls nach DIN 53 455 bestimmt wird. Die Schrumpffolie gemäß der Erfindung weist eine Reißfestigkeit in Längsrichtung von mehr als 50 N/mm$^2$, vorzugsweise im Bereich von 70 bis 100 N/mm$^2$, auf und in Querrichtung von mehr als 220 N/mm$^2$, vorzugsweise im Bereich

von 235 bis 290 N/mm$^2$.

Insbesondere die optischen Eigenschaften der erfindungsgemäßen Folie sind sehr hervorragend. Der Glanzwert liegt im Bereich von 110 bis 130, bestimmt nach DIN 67 530 bzw. ASTM-D 523 (20°-Wert), und die Trübung der Folie beträgt weniger als 20 %, vorzugsweise 10 bis 15 %, wobei die Trübung der Folie in Anlehnung an ASTM-D 1003-52 gemessen wird. Anstelle einer 4°-Lochblende wird eine 1°-Spaltblende eingesetzt, und die Trübung in Prozent wird für vier übereinanderliegende Folienlagen angegeben. Die vier Lagen wurden gewählt, da man hierdurch den optimalen Meßbereich ausnutzt. Der besonders hohe Glanzwert der erfindungsgemäßen Folie wirkt sich insbesondere sehr werbewirksam aus, und deshalb ist das Einsatzgebiet der erfindungsgemäßen Folie vor allem dort zu sehen, wo der Etikettierprozeß (Stülpen und Schrumpfen) automatisch erfolgt und an das Produkt (Dose/Flasche/Spender) hohe optische Anforderungen gestellt werden.

Die eingangs genannte Aufgabe der Erfindung wird auch durch ein Verfahren zur Herstellung der vorstehend beschriebenen Folie gelöst. Das erfindungsgemäße Verfahren besteht darin, daß mittels Extrusion bzw. Coextrusion in einer Breitschlitzdüse zunächst eine Vorfolie hergestellt wird, die dann auf einer Kühlwalze verfestigt und daran anschliessend in Längs- und Querrichtung durch Strecken orientiert wird. Erfindungsgemäß werden die Bedingungen in der Längsstreckung so gewählt, daß die längsgestreckte Folie nur wenig orientiert ist. Die Voraussetzungen für die Erzielung eines hohen Querschrumpfes und eines niedrigen Längsschrumpfes sind dann besonders günstig. Ein gebräuchliches Maß für die Beurteilung des Ausmaßes der Orientierung der längsgestreckten Folie ist die Doppelbrechung Δn. Die erfindungsgemäße Folie zeichnet sich dadurch aus, daß die Doppelbrechung der längsgestreckten, aber noch nicht quergestreckten Folie einen Wert von Δn = 6 · 10$^{-3}$ nicht übersteigt. Vorzugsweise sollte die Doppelbrechung Δn weniger als 4 · 10$^{-3}$ betragen. Die Längsstreckung wird durchgeführt bei einer Temperatur von mehr als 115 °C, vorzugsweise im Bereich von 120 bis 130 °C, und mit einem Streckverhältnis von kleiner 3, vorzugsweise im Bereich von 1,5 bis 2,5. Auch bei einem so niedrigen Streckverhältnis ergibt sich überraschenderweise für die oben angegebene Rohstoffzusammensetzung ein gutes Dickenprofil in Maschinenrichtung. Die Dickenabweichungen betragen weniger als 7 bis 9 %.

Überraschenderweise hat sich gezeigt, daß bei diesen Bedingungen und für die vorher beschriebene Polymermischung die Querstrecktemperatur $T_q$ sehr viel niedriger gewählt werden kann als dies sonst üblich ist und dabei eine sehr gute Prozeßsicherheit gewährleistet ist (gleichbedeutend mit wenig Abrisse im Querstreckrahmen), die insbesondere auch bei höherer Produktionsgeschwindigkeit (≥ 100 m/min) aufrechterhalten wird. Erfindungsgemäß wird die Streckung in Querrichtung bei einer Temperatur von weniger als 120 °C durchgeführt, vorzugsweise von weniger als 110 °C. Das Streckverhältnis in Querrichtung beträgt erfindungsgemäß mehr als 8, vorzugsweise im Bereich von 9 bis 12. Durch das hohe Querstreckverhältnis ergibt sich ein sehr gleichmäßiges Dickenprofil. Die Profilschwankungen betragen deutlich weniger als 8 %.

Nach der Streckung der Folie in Querrichtung schließt sich eine abschließende Fixierstufe an. Dabei wird die Folie bei einer Temperatur von 20 bis 40 °C unterhalb der Strecktemperatur, insbesondere bei einer Temperatur unterhalb von 110 °C, vorzugsweise von unterhalb von 80 °C, in dem Streckrahmen, eventuell leicht konvergierend, weitergeführt. Die Konvergenz während der Fixierstufe beträgt vorzugsweise 5 bis 15 %.

Hervorgehoben werden muß, daß aufgrund des erfindungsgemäßen Herstellungsverfahrens die Ausrüstung der Deckschichten mit niedermolekularen Additiven (Carbonsäureamiden, N,N-bis-ethoxyalkylaminen) ohne größere technische Probleme möglich ist. Ausdampfprobleme und Ablagerungsprobleme in Querstreckrahmen treten nicht auf. Aufgrund der erfindungsgemäßen Verfahrensbedingungen kommt es auch nicht zu störenden Harzausdampfungen.

Die Bedruckbarkeit bzw. Verklebbarkeit der Folie wird durch eine der üblichen Oberflächenbehandlungen vor dem Aufrollen erreicht, z. B. Flammbehandlung oder elektrische Coronabehandlung.

Zur Coronabehandlung, die nach einer der bekannten Methoden durchgeführt werden kann, wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladungen wird die Luft oberhalb der Folienoberfläche ionisiert und verbindet sich mit den Molekülen auf der Folienoberfläche, so daß polare Einlagerungen in der im wesentlichen unpolaren Polymermatrix entstehen.

Die Behandlungsintensitäten liegen im üblichen Rahmen. Behandlungsintensitäten von 38 bis 42 mN/m sind bevorzugt.

Zur Bedruckung wird die Folie vorzugsweise im Konterdruck bedruckt.

Die so hergestellte Schrumpffolie besitzt eine Kombination von Eigenschaften, die sie in besonders hohem Maß geeignet macht für ihren bestimmungsgemäßen Verwendungszweck als Folie für Rundumetiketten. Ihr bevorzugtes Einsatzgebiet ist vor allem dort zu sehen, wo die Gestaltänderung der Dose oder Flasche im Bereich der Etikettierung weniger als 25 % ausmacht.

Die im vorstehenden in allen Einzelheiten beschriebene erfindungsgemäße Folie soll nachfolgend durch ein Ausführungsbeispiel noch deutlicher erläutert werden.

Beispiel

A-Basisschicht: 10 Gew.-% isotaktisches Polypropylen,
8 Gew.-% hydriertes Cyclopentadienharz mit einer Erweichungstemperatur von 120 °C,
81,6 Gew.-% statistisches Ethylen-Propylen-Copolymeres mit einem Ethylengehalt von 4,5 Gew.-% ($T_M = 136$ °C, $\Delta h_M = 70$ J/g)
0,2 Gew.-% N,N-bis-ethoxyalkylamin und
0,2 Gew.-% Erucasäureamid.

B-Deckschicht: 1 : 1-Mischung aus
1.) statistischen Ethylen-Propylen-Buten-1-Copolymeren mit einem $C_2$-Gehalt von 1,4 Gew.-%, einem $C_3$-Gehalt von 95,8 Gew.-% und einem $C_4$-Gehalt von 2,8 Gew.-% und
2.) einem statistischen Propylen-Buten-1-Copolymeren mit einem $C_4$-Gehalt von 66,8 Gew.-%

Der Schmelzindex der Mischung bei 230 °C und 2,16 kp Belastung beträgt 8 g/10 min. Als Antiblockmittel wurden dem Deckschichtrohstoff 0,2 Gew.-% Calciumcarbonat mit einer mittleren Teilchengröße von 2 µm zugesetzt.

Diese BAB-Folie wird über die Verfahrensschritte Coextrusion, Abkühlen, Längsstreckung, Querstreckung, Fixierung hergestellt. Die Gesamtdicke der Folie beträgt 40 µm, die Dicke der Deckschichten 0,7 µm. Die Herstellungsbedingungen in den einzelnen Verfahrensschritten sind:

Extrusion: Temperatur der Schmelzen 240 °C
Temperatur der Abzugswalze 30 °C

Längsstreckung: Temperatur T = 122 °C
Längsstreckverhältnis λ = 1,8

Querstreckung: Temperatur T = 110 °C
Querstreckverhältnis λ = 10

Fixierung: Temperatur T = 80 °C
Zeitdauer t = 1 s

Die auf diese Weise hergestellte Folie besaß die in der Tabelle aufgelisteten Eigenschaften (letzte Zeile). Die Folie wurde vor der Aufrollung einer Coronabehandlung unterzogen, um eine Bedruckbarkeit/Verklebbarkeit zu gewährleisten. Die Behandlungsintensität betrug 39 mN/m.

In der Tabelle wurden der erfindungsgemäßen Folie eine PVC-Folie, Folien gemäß zweier angegebener japanischer Vorveröffentlichungen sowie eine unter ähnlichen wie den erfindungsgemäßen Bedingungen hergestellte Polypropylenfolie ohne Harzzusatz und ohne Deckschichten gegenübergestellt. Ein Vergleich der ausgewiesenen Eigenschaften zeigt, daß sich die erfindungsgemäße Folie insbesondere im Hinblick auf die aufgabengemäß angestrebte Eigenschaftskombination allen bekannten Folien als überlegen erweist.

Tabelle

| Eigenschaften Folie | Schrumpf (%) 15 min in Luft, quer/längs 90°C | 120°C | E-Modul N/mm² längs | quer | Reißfestigkeit N/mm² längs | quer | Trübung (%) | Glanz | Dichte (kg/m³) |
|---|---|---|---|---|---|---|---|---|---|
| PVC | 50/6 | 52/6 | 2 700 | 3 700 | 60 | 110 | 20 | 120 | 1 390 |
| JP 91 354 | 20/3 | 58/7 | <1 000 | ~1 000 | <50 | ~100 | ~30 | ~100 | ~900 |
| JP 224 868 |  |  | <1 000 | ~1 000 | <50 | ~100 | ~30 | ~100 | ~900 |
| Polypropylen | 10/6 | 20/9 | 2 200 | 4 500 | 130 | 300 | 30 | 105 | 900 |
| EP-A-171 733 | 100 °C, 5 min 38/10 |  | ~1 500 | ~1 500 | 120 | 100 | 30 | 100 | 900 |
| Erfindungsgemäße Folie | 18/3 | 45/9 | 1 200 | 4 500 |  | 250 | 11 | 130 | 900 |

## Patentansprüche

1. Transparente schrumpffähige Folie umfassend eine Basisschicht hergestellt aus propylenhaltigen Polymeren und Kohlenwasserstoffharz, dadurch gekennzeichnet, daß die Basisschicht als wesentliche Komponenten enthält:

   5 bis 40 Gew.-% eines Propylenhomopolymeren,

   bis 30 Gew.-% eines hydrierten Kohlenwasserstoffharzes mit einem Erweichungspunkt im Bereich von 80 bis 125 °C und mindestens

   30 Gew.-% eines statistischen Ethylen-Propylen-Copolymeren,

   wobei die Prozentangaben bezogen sind auf das Gesamtgewicht der Mischung, und daß beidseitig auf der Basisschicht Deckschichten angeordnet sind und daß die Folie ein Schrumpfvermögen von mehr als 15 % bei 90 °C und von mehr als 40 % bei 120 °C in Querrichtung und gleichzeitig ein Schrumpfvermögen von weniger als 5 % bei 90 °C und von weniger als 10 % bei 120 °C in Längsrichtung besitz, wobei die Prozentangaben jeweils bezogen sind auf die jeweilige Längenausdehnung der Folie vor dem Schrumpfprozeß.

2. Folie nach Anspruch 1, dadurch gekennzeichnet, daß das statistische Copolymere eine Schmelzenthalpie von 60 bis 90 J/g besitzt.

3. Folie nach Anspruch 1 oder 2, dadurch gekennzeichnet, daß die Deckschichten olefinische Polymere enthalten wie Ethylenhomopolymere, Copolymere aus Ethylen und Propylen, Ethylen oder Propylen und Butylen oder einem anderen Alpha-Olefin mit 5 bis 10 Kohlenstoffatomen, Terpolymere aus Ethylen, Propylen und Butylen oder einem anderen Alpha-Olefin mit 5 bis 10 Kohlenstoffatomen oder Mischungen aus diesem Polymeren.

4. Folie nach Anspruch 3, dadurch gekennzeichnet, daß die Deckschichten Ethylen-Propylen-Copolymere mit Propylen als Hauptkomponente und einem Ethylengehalt von 2 bis 10 Gew.-%, bezogen auf das Copolymere, enthalten oder Propylen-Butylen-Copolymere mit Propylen als Hauptkomponente und einem Butylengehalt von 0,5 bis 25 Gew.-%, bezogen auf das Copolymere, oder Ethylen-Propylen-Butylen-Terpolymere mit Propylen als Hauptkomponente, 0,5 bis 7 Gew.-% Ethylen und 5 bis 30 Gew.-% Butylen, bezogen auf das Gesamtgewicht des Terpolymeren, oder Mischungen aus diesen Polymeren.

5. Folie nach einem der Ansprüche 1 bis 4, dadurch gekennzeichnet, daß das Olefinpoylmere der Deckschichten einen Schmelzpunkt besitzt, der niedriger ist als der Schmelzpunkt der Polymer/Harz-Mischung der Basisschicht, und daß der Schmelzflußindex des Olefinpolymeren bzw. der Olefinpolymermischung höher liegt als jener des Propylenpolymeren der Basisschicht, insbesondere im Bereich von 1 bis 12 g/10 min, vorzugsweise 3 bis 9 g/10 min, bei 230 °C und 2,16 kp Belastung.

6. Folie nach einem der Ansprüche 1 bis 5, dadurch gekennzeichnet, daß die Deckschichten zusätzlich Antistatika in einer geeigneten Menge im Bereich von 0,05 bis 1 Gew.-%, bezogen auf das Gewicht der Deckschichten, enthalten.

7. Folie nach einem der Ansprüche 1 bis 6, dadurch gekennzeichnet, daß die Deckschichten zusätzlich 0,1 bis 0,8 Gew.-%, bevorzugt 0,15 bis 0,3 Gew.-%, eines Antiblockmittels einer mittleren Teilchengröße von 0,5 bis 3 $\mu$m, bevorzugt von 1 bis 2 $\mu$m, enthalten.

8. Folie nach einem der Ansprüche 1 bis 7, dadurch gekennzeichnet, daß sie eine Dicke im Bereich von 20 bis 60 $\mu$m, vorzugsweise von 30 bis 50 $\mu$m, besitzt und daß die Deckschichten einem Dicke von 0,5 bis 1,5 $\mu$m aufweisen.

9. Folie nach einem der Ansprüche 1 bis 8, dadurch gekennzeichnet, daß sie einen E-Modul in Längsrichtung von mehr als 1200 N/mm$^2$, bevorzugt von 1300 bis 1800 N/mm$^2$, besitzt und einen E-Modul in Querrichtung von mehr als 3000 N/mm$^2$, vorzugsweise von 3500 N/mm$^2$ bis 4500 N/mm$^2$.

10. Folie nach einem der Ansprüche 1 bis 9, dadurch gekennzeichnet, daß sie eine Reißfestigkeit in Längsrichtung von mehr als 50 N/mm$^2$, vorzugsweise im Bereich von 70 bis 100 N/mm$^2$, besitzt und in Querrichtung von mehr als 220 N/mm$^2$, vorzugsweise im Bereich von 235 bis 290 N/mm$^2$.

11. Verfahren zur Herstellung einer Folie nach einem der Ansprüche 1 bis 10, bei dem mittels Coextrusion in einer Breitschlitzdüse zunächst eine Vorfolie hergestellt wird, die dann auf einer Kühlwalze verfestigt und daran anschließend in Längs- und Querrichtung durch Strecken orientiert wird, dadurch gekennzeichnet, daß die Längsstreckung bei einer Temperatur von mehr als 115 °C, vorzugsweise im Bereich von 120 bis 130 °C, und mit einem Streckverhältnis von kleiner 3, vorzugsweise im Bereich von 1,5 bis 2,5, durchgeführt wird und die Streckung in Querrichtung bei einer Temperatur von weniger als 120 °C, vorzugsweise von weniger als 110 °C, mit einem Streckverhältnis in Querrichtung von mehr als 8, vorzugsweise im Bereich von 9 bis 12.